# EUROPÄISCHE PATENTSCHRIFT

(11) **EP 0 471 316 B1**
(45) Veröffentlichungstag und Bekanntmachung des Hinweises auf die Patenterteilung: **18.09.1996**
(21) Anmeldenummer: 91113442.7
(22) Anmeldetag: 10.08.1991
(51) Int. Cl.: G01F 1/68

(54) **Sensor für thermische Massenstrommesser**
Sensor for a thermal flowmeter
Détecteur pour un débitmètre thermique

(30) Priorität: 17.08.1990 DE 9011927 U; 16.07.1991 DE 4123482
(43) Veröffentlichungstag der Anmeldung: 19.02.1992
(73) Patentinhaber: SENSYCON GESELLSCHAFT FÜR INDUSTRIELLE SENSORSYSTEME UND PROZESSLEITTECHNIK MBH, D-30179 Hannover (DE); MANNESMANN Aktiengesellschaft, D-40027 Düsseldorf (DE)
(72) Erfinder: Eiermann, Kurt, Dr., W-6102 Pfungstadt 2 (DE); Link, Dieter, W-6450 Hanau 11 (DE); Hohenstatt, Martin, Dr., W-6451 Hammersbach (DE); Göbel, Reiner, W-6450 Hanau 11 (DE); Schrode, Jürgen, W-6454 Bruchköbel (DE); Gabel, Andreas, W-6095 Ginsheim 2 (DE); Höhler, Andreas, Dr., W-6450 Hanau 9 (DE)
(74) Vertreter: Meissner, Peter E., Dipl.-Ing.

(56) Entgegenhaltungen:
- EP-A- 0 354 598

## Beschreibung

Die Erfindung betrifft einen Sensor für thermische Massenstrommesser, bestehend aus einem plattenförmigen Dünnfilmwiderstand und einer Halterung in Form eines mit Kapillarbohrungen für die Zuleitungen versehenen zylindrischen Stabes aus einem elektrisch isolierenden Material.

In der Verfahrenstechnik werden vielfach thermische Massenstrommesser verwendet. die nach dem Prinzip des Hitzdraht- oder Heißfilmanemometers arbeiten. Solche Massenstrommesser sind beispielsweise in der DE-OS 35 42 788 beschrieben.

Die als Sensoren verwendeten Dünnfilmwiderstände sind mit einer Halterung versehen, oft einer stabförmigen Mehrfachkapillare, die auch die Anschlußdrähte des Widerstandes aufnimmt. Der Dünnfilmwiderstand, bestehend aus einem keramischen Träger und einer dünnen Metallschicht und gegebenenfalls einer keramischen Abdeckplatte, wird gemäß DE-OS 35 42 788 in einen Schlitz der Mehrfachkapillaren eingeführt und mit einem Glaslot oder einer Glasfritte befestigt.

Diese Befestigungsart ist mechanisch nicht sehr stabil. Außerdem besitzt das Glaslot bei dieser Befestigungsart eine relativ große Oberfläche, was bei aggressiven Medien zu einer baldigen Zerstörung des Glaslots und damit der Befestigung führen kann.

Ein weiterer Nachteil dieser "massiven" Befestigungsart sind parasitäre Wärmeströme von dem Heizwiderstand in die weiter entfernt liegenden, nicht mehr gut umströmten Bereiche der Halterung. Ebenso nachteilig ist die relativ hohe wirksame Wärmekapazität des Kapillarrohres. Aufgrund dieser beiden Eigenschaften ergeben sich bei Änderungen der Mediums-/bzw. Heizwiderstandstemperatur recht lange Ansprechzeiten, in denen sich die gesamte Temperaturverteilung am und im Halter neu einstellen muß.

Es war daher Aufgabe der vorliegenden Erfindung einen Sensor für thermische Massenstrommesser zu entwickeln. bestehend aus einem plattenförmigen Dünnfilmwiderstand und einer Halterung in Form eines mit Kapillarbohrungen für die Zuleitungen versehenen zylindrischen Stabs aus einem elektrisch isolierenden Material, wobei die Befestigung des Widerstands an der Halterung mechanisch sehr stabil sein. das Befestigungsmittel dem zu messenden Medium nur eine möglichst kleine Oberfläche bieten und die Halterung durch Minimierung der Wärmekapazität und parasitärer Wärmeströme verbesserte Ansprechzeiten bei schwankenden Mediumstemperaturen aufweisen sollte.

Diese Aufgabe wird erfindungsgemäß durch die Merkmall des Anspruchs 1 gelöst. Zweckmäßige Ausgestaltungen sind in den Unteransprüchen augegeben. Eine Stirnfläche der Mehrfachkapillaren ist mit einem dem Querschnitt des Dünnfilmwiderstands angepassten Sackloch versehen, der Dünnfilmwiderstand ist mit einer seiner Schmalseiten zu 10 bis 60 % seiner Länge in dieses Sackloch passend eingesteckt und der enge Spalt zwischen Sackloch und Dünnfilmwiderstand mit einer Haftmasse ausgefüllt.

Das Sackloch ist aus einer in einer Stirnfläche der stabförmigen Mehrfachkapillaren eingebracht Schlitz und einem die Mehrfachkapillare eng umschließenden Rohr aus einem elektrisch isolierenden Material gebildet.

Die Mehrfachkapillare innerhalb des sie umhüllenden Rohres ist nicht als durchgehender Zylinder gestaltet, sondern sie ist mit einer Verjüngung oder Unterbrechung versehen, wobei dann zumindest über die Länge der Unterbrechung oder Verjüngung kein Kontakt mit dem Mantelrohr vorliegt. Der Vorteil liegt in einer kleineren wirksamen Wärmekapazität und einer verringerten parasitären Wärmeabfuhr in die Halterung. Ein Großteil der verbleibenden parasitären Wärmeströme wird auf kurzem Weg in wandnahe Bereiche, die vom Medium umströmt werden, umgeleitet. Dadurch kann eine besonders schnelle Ansprechzeit des Sensors gegenüber Änderungen der Mediums- bzw. der Heizertemperatur gewährleistet werden, denn die Neueinstellung der Temperaturverteilung geschieht über die kurzen Wege zur Wärmequelle oder Senke und die kleinen beteiligten Wärmekapazitäten entsprechend schnell. Die Ausführung der Verjüngung kann beispielsweise in Form einer dünnen Säule oder eines Quaders erfolgen, wobei dabei die Funktion der elektrischen Isolation der Zuleitungsdrähte bestehen bleibt. Es kann jedoch auch sinnvoll sein, die elektrische Isolation anderweitig zu gewährleisten und das Kapillarrohr vollständig zu unterbrechen, d.h., es aus zwei getrennten Teilen bestehen zu lassen, die jeweils für sich über die Haftmasse mit dem Mantelrohr verbunden werden.

Eine besonders einfache Ausführungsform der erfindungsgemäßen Halterung erhält man, wenn die Länge der Mehrfachkapillaren kürzer ist als das umschließende Rohr.

Die Mehrfachkapillare besteht aus einem elektrisch isolierenden Material. Vorzugsweise wird hierfür Keramik oder Glas eingesetzt. Als Haftmasse kann eine Glasfritte oder ein Gaslot verwendet werden. Für das umschließende Rohr, verwendet man vorzugsweise ein dünnwandiges Rohr aus Keramik mit dem gleichen thermischen Ausdehnungskoeffizient wie die Mehrfachkapillare.

Es ist bekannt, die Sensorhalterung mit einem Schutzrohr zu umgeben, wobei zwischen Halterung und Schutzrohr ein Spalt verbleibt. Das hat den Nachteil, daß sich dieser Spalt mit Schmutz vollsetzen kann, der in dem zu messenden Medium mitgeführt wird und der zu einer Veränderung der Kennlinie des Sensors durch erhöhte Wärmeabfuhr führen kann. Es ist daher vorteilhaft, die Halterung mit einem enganliegenden Schutzrohr aus einem korrosionsfesten Material zu versehen, das mit radialen und tangentialen Schlitzen für eine leichtere Montage und zur Aufnahme von mechanischen Spannungen ausgestattet ist.

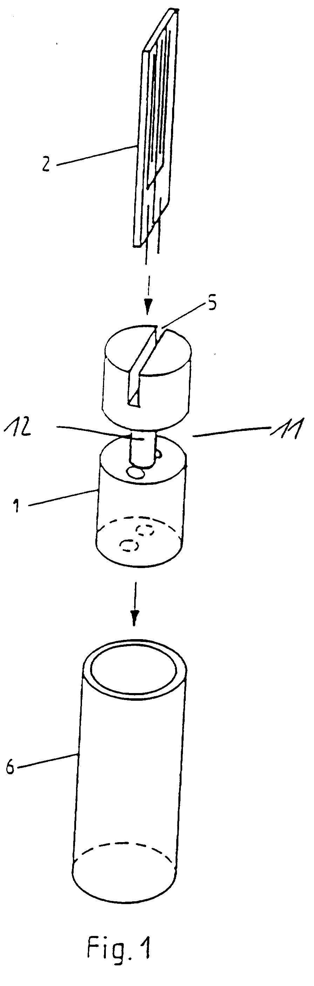

Figur 1 zeigt eine Ausführungsform der erfindungsgemäßen Halterung gemäß Ansprüche 1 und 2. Die Mehrfachkapillare (1) besitzt eine Verjüngung (11), die die Wärmekapazität der Halterung herabsetzt und parasitäre Wärmeströme zwingt, über die dünne Säule (12) und den Querschnitt des Mantelrohres zu fließen. Die Wärmeleitung über Säule und Mantelrohr ist wegen der geringen Querschnitte kleiner als bei einer massiven Ausführung der Halterung. Als Folge davon wird eine drastische Verbesserung der Ansprechzeit bei schwankenden Mediumstemperaturen beobachtet. Die Säule (12) übernimmt weiterhin die elektrische Isolation zwischen den Zuleitungen (4) des Dünnfilmwiderstandes (2).

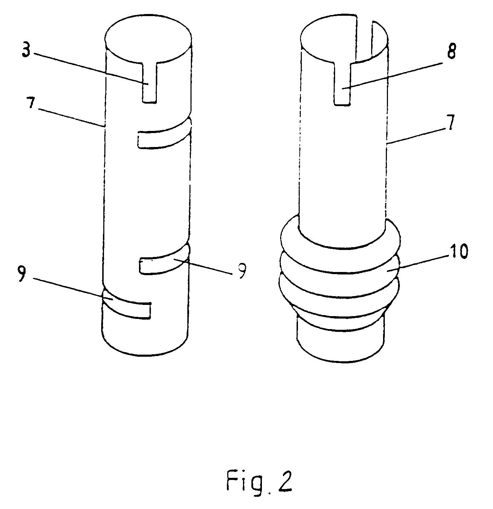

Figur 2 zeigt ein dünnwandiges, metallenes Schutzrohr (7), das radiale Schlitze (8) und tangentiale Schlitze (9) besitzt. Anstelle der tangentialen Schlitze (9) kann auch ein Federbalg vorhanden sein. Dieses Schutzrohr (7) umgibt die Mehrfachkapillare (1).

## Patentansprüche

1. Sensor für thermische Massenstrommesser, bestehend aus einem plattenförmigen Dünnfilmwiderstand und einer Halterung in Form einer Mehrfachkapillaren aus einem elektrisch isolierenden Material, wobei die Stirnfläche der Mehrfachkapillaren (1) mit einem dem Querschnitt des Dünnfilmwiderstandes (2) angepaßten Sackloch (3) versehen ist, in das der Dünnfilmwiderstand (2) mit einer seiner Schmalseite zu 10 bis 60 % seiner Länge eingesteckt ist und der enge Spalt zwischen Sackloch (3) und Dünnfilmwiderstand (2) mit einer Haftmasse ausgefüllt ist,
dadurch gekennzeichnet,
daß die Halterung aus einer Mehrfachkapillaren (1) und einem die Mehrfachkapillare eng umschließenden Rohr (6) besteht, wobei das Sackloch (3) aus einem in eine Stirnfläche der Mehrfachkapillaren (1) eingebrachten Schlitz (5) und dem umschließenden Rohr (6) gebildet ist und
daß die Mehrfachkapillare (1) mindestens eine Verjüngung (11) oder Unterbrechung aufweist, wobei über die Länge der Verjüngung oder Unterbrechung kein Kontakt der Mehrfachkapillaren (1) zum Rohr (6) vorliegt.

2. Sensor nach Anspruch 1,
dadurch gekennzeichnet,
daß die Länge der Mehrfachkapillaren (1) kürzer ist als das umschließende Rohr (6).

3. Sensor nach einem der Ansprüche 1 oder 2,
dadurch gekennzeichnet,
daß das elektrisch isolierende Material der Mehrfachkapillaren aus Keramik oder Glas und die Haftmasse aus der Glasfritte oder einem Glaslot besteht.

4. Sensor nach einem der vorhergehenden Ansprüche,
dadurch gekennzeichnet,
daß die Halterung mit einem metallischen, eng anliegenden Schutzrohr (7) umgeben ist, das mit radialen (8) und tangentialen Schlitzen (9) oder einem Federbalg (10) versehen ist.

## Claims

1. A sensor for thermal flowmeters, consisting of a plate-shaped thin film resistance and of a mounting in the form of a multiple capillary of an electrically insulating material, in which the front face of the multiple capillary (1) is provided with a blind hole (3) adapted to the cross-section of the thin film resistance (2), into which blind hole (3) the thin film resistance (2) is inserted with a length 10 to 60 % of its narrow side, and the close gap between the blind hole (3) and the thin film resistance (2) is filled with an adhesion substance,
characterised in that
the mounting consists of a multiple capillary (1) and of a tube (6) closely surrounding the multiple capillary, in which the blind hole (3) is formed from a slit (5) introduced into a front face of the multiple capillary (1) and from the surrounding tube (6)
and
the multiple capillary (1) has at least one narrowing (11) or interruption, in which along the length of the narrowing or interruption no contact of the multiple capillary (1) to the tube (6) exists.

2. A sensor according to Claim 1,
characterised in that
the length of the multiple capillary (1) is shorter than the surrounding tube (6).

3. A sensor according to one of Claims 1 or 2,
characterised in that
the electrically insulating material of the multiple capillary consists of ceramic or glass and the adhesion substance consists of a glass frit or of a glass solder.

4. A sensor according to one of the preceding claims,
characterised in that
the mounting is surrounded by a metallic protective tube (7) lying closely against it, which is provided with radial (8) and tangential slits (9) or with a spring bellows (10).

## Revendications

1. Capteur pour débitmètre massique thermique, constitué d'une résistance à film mince en forme de plaque et d'un support sous forme d'un capillaire multiple en une matière électriquement isolante, la face frontale du capillaire multiple (1) étant munie d'un trou borgne (3) adapté à la section transversale de la résistance à fil mince (2), dans lequel la résistance à film mince (2) est enfichée par un de ses chants jusqu'à 10 à 60% de sa longueur, et l'espace étroit entre le trou borgne (3) et la résistance à film mince (2) étant rempli d'une masse adhésive,
caractérisé en ce que le support est constitué d'un capillaire multiple (1) et d'un tube (6) entourant étroitement le capillaire multiple, le trou borgne (3) étant formé par une fente (5) prévue dans une face frontale du capillaire multiple (1) et le tube (6) l'entourant, et en ce que le capillaire multiple (1) présente au moins un rétrécissement (11) ou interruption, aucun contact du capillaire multiple (1) au tube (6) n'existant sur la longueur du rétrécissement ou de l'interruption.

2. Capteur selon la revendication 1,
caractérisé en ce que la longueur du capillaire multiple (1) est plus courte que le tube (6) l'entourant.

3. Capteur selon une des revendications 1 ou 2,
caractérisé en ce que la matière électriquement isolante du capillaire multiple est constituée de céramique ou de verre et la matière adhésive d'une soudure de verre ou de verre fritté.

4. Capteur selon une des revendications précédentes,
caractérisé en ce que le support est entouré par un tube de protection métallique (7) étroitement adjacent, qui est muni de fentes radiales (8) et tangentielles (9) ou d'un soufflet (10).
